# FASCICULE DE BREVET EUROPEEN

(11) **EP 1 982 394 B1**
(45) Date de publication et mention de la délivrance du brevet: **26.12.2018**
(21) Numéro de dépôt: 07704455.0
(22) Date de dépôt: 09.02.2007
(51) Int. Cl.: H02G 5/00, H02G 3/04, H02G 11/00

(54) **DISPOSITIF DE TRANSPORT DE L'ELECTRICITE A COURANT FORT ET FREQUENCE ELEVEE**
VORRICHTUNG ZUM TRANSPORT VON ELEKTRIZITÄT BEI STARKSTROM UND HOHER FREQUENZ
DEVICE FOR TRANSPORTING ELECTRICITY AT HEAVY CURRENT AND HIGH FREQUENCY

(30) Priorité: 10.02.2006 FR 0650490
(43) Date de publication de la demande: 22.10.2008
(73) Titulaire: Orano Cycle, 92400 Courbevoie (FR); Commissariat à l'Énergie Atomique et aux Énergies Alternatives, 75015 Paris (FR)
(72) Inventeur: LACOMBE, Jacques, F-30131 Pujaut (FR); BRUN, Patrice, F-30200 Saint-michel D'euzet (FR); FLAMENT, Thierry, F-78350 Jouy En Josas (FR); CHAUVIN, Eric, F-94120 Fontenay Sous Bois (FR); PROD'HOMME, Antony, CA20 1EF Gosforth Seascale (GB)
(74) Mandataire: Ahner, Philippe
(86) Numéro de dépôt international: PCT/EP2007/051236
(87) Numéro de publication internationale: WO 2007/090874

(56) Documents cités:
- DE-C1- 19 740 912
- FR-A1- 2 258 075
- GB-A- 2 051 461

## Description

Le sujet de cette invention est un dispositif de transport de l'électricité à courant fort et fréquence élevée.

S'il existe de nombreux genres de dispositifs conducteurs de l'électricité, on ne connaît, pour servir à des courants forts et des fréquences élevées, que des éléments conducteurs de grosse section et rigides, construits généralement sous forme de barres ou de plaques allongées en cuivre.

Des difficultés apparaissent dans certaines applications où le dispositif conducteur doit relier un dispositif d'alimentation à un appareil qui soit susceptible de bouger légèrement ou d'être déplacé. La situation apparaît dans des dispositifs de vitrification où le courant électrique sert à alimenter le moyen d'induction électromagnétique disposé autour d'un creuset et destiné à faire fondre la matière qui y a été introduite, et où le creuset peut parfois être déplacé. Dans l'application à la vitrification de déchets radioactifs, le creuset étant derrière une paroi de protection biologique que le dispositif conducteur doit traverser sans jeu pour éviter des fuites de radiations ionisantes, on se trouve devant le dilemme de placer un dispositif conducteur à éléments rigides, dont la position et l'orientation sont imposées à l'endroit de la traversée de la paroi mais doivent être variables pour suivre des déplacements de l'appareil auquel le dispositif conducteur est relié derrière la paroi, d'autant moins évitables que cet appareil ne peut être placé que par des moyens de télémanipulation trop imprécis pour éviter des erreurs de position.

Sous sa forme la plus générale, l'invention concerne un dispositif de transport de l'électricité comprenant au moins un élément conducteur de l'électricité, construit essentiellement en un profilé rigide et allongé, l'élément conducteur comprenant deux tronçons séparés par un raccord composé d'éléments flexibles conducteurs de l'électricité, caractérisé en ce qu'il comprend un dispositif de support conjoint des deux tronçons ; et les éléments flexibles sont des tubes métalliques brasés sur les tronçons de l'élément conducteur.

Les éléments flexibles assurent la conduction de l'électricité entre les tronçons au prix d'une perte d'énergie ; cette perte est modeste en raison de la petite longueur des éléments flexibles.

Les éléments flexibles constituent donc une charnière au milieu du dispositif conducteur, qui se déforme sans se rompre en suivant les déplacements de l'appareil. L'élément de support conjoint des tronçons évite des déplacements accidentels trop différents des tronçons pendant qu'ils sont manipulés, qui mèneraient à la rupture des éléments flexibles les joignant.

La combinaison des tubes métalliques plutôt flexibles pour joindre les tronçons et du support conjoint des tronçons est justifiée dans la situation très fréquente où les tronçons doivent être refroidis par un liquide: les tubes servent alors non seulement à la connexion électrique mais à la connexion hydraulique en joignant des canaux des tronçons où circule ce liquide.

L'art antérieur (GB-A- 2 051 461 par exemple) illustre des conducteurs électriques rigides joints par des tresses métalliques ou des éléments bien souples mais pas étanches et qui ne permettent donc pas au liquide de refroidissement de circuler d'un tronçon à l'autre. Il faudrait alors ajouter des conduits souples avec des raccords beaucoup plus compliqués que de simples brasures. Et dans FR-A-2 258 075, on retrouve un système de tronçons rigides conducteurs de l'électricité et refroidis pour acheminer du courant à un four électrique à arc, et qui sont associés à des câbles flexibles disposés en série avec eux, ces câbles étant refroidis à l'eau, pour compléter l'acheminement du courant tout en autorisant les déplacements du four.

D'autres dispositions plus particulières de l'invention aident à l'appliquer au contexte technique de traversée d'une paroi de protection biologique dans laquelle une portion du dispositif doit être encastrée sans jeu. Elle pourra prendre l'aspect d'un troisième tronçon muni de canaux de refroidissement, lesdits canaux de refroidissement étant construits sur la surface du troisième tronçon et de forme sinueuse, le troisième tronçon comprenant des écrans de radiations ionisantes alignés avec des portions rectilignes des canaux de refroidissement, un capot de blindage électromagnétique comprenant une surface extérieure d'ajustement et qui entoure le troisième tronçon, et une matière de remplissage qui s'étend entre le troisième tronçon et le capot de blindage électromagnétique.

D'autres dispositions servent à assurer un déplacement de l'appareil associé à une traction ou à une compression du dispositif plutôt qu'à sa flexion. On pourra ainsi prévoir que l'élément conducteur comprend au moins un troisième tronçon (correspondant éventuellement au troisième tronçon susmentionné) mis en prolongement avec un autre des tronçons, et un connecteur de raccordement des tronçons comprenant des mâchoires de pressage desdits tronçons mis en prolongement.

Il est aussi utile de prévoir la possibilité de démonter des tronçons successifs du dispositif de transport munis de canaux de refroidissement : ceux-ci seront alors avantageusement munis de connecteurs séparables, encore plus avantageusement munis de clapets à auto-obturation à l'état démonté.

D'autres dispositions encore, peut-être plus secondaires, apparaîtront aussi dans la suite de la description, qu'on mènera en liaison aux figures, dont :
- la figure 1 illustre une application privilégiée de l'invention,
- la figure 2 illustre un tronçon rigide du dispositif,
- la figure 3 illustre la portion flexible du dispositif,
- et les figures 4 et 5 illustrent des raccordements mécaniques, électriques et hydrauliques de tronçons aux conducteurs refroidis.

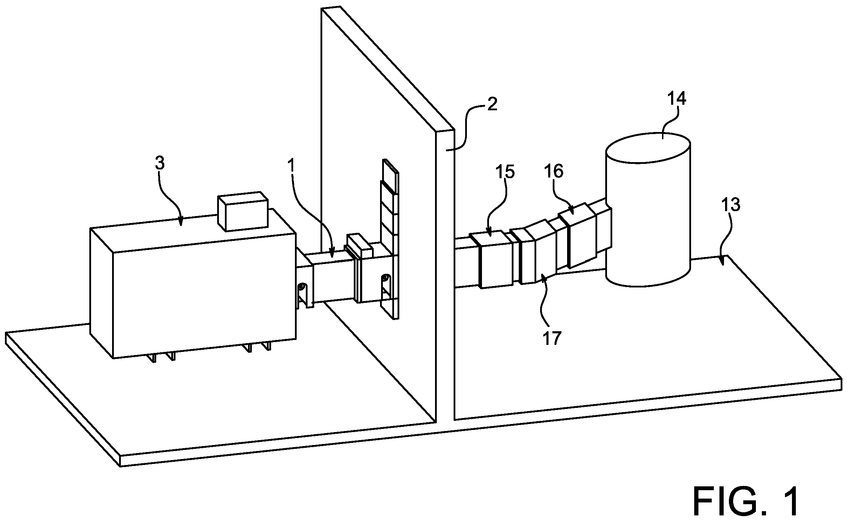

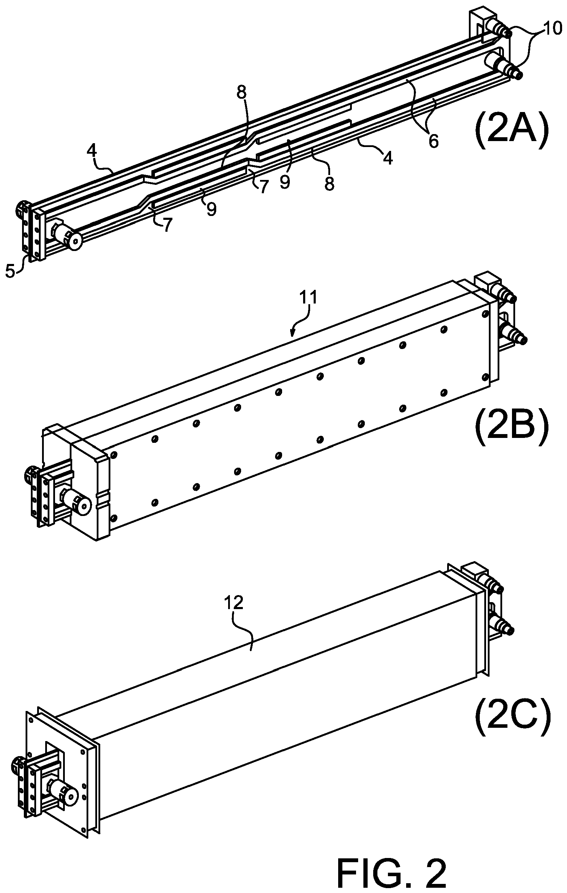

Dans une application principale envisagée, le dispositif de transport de l'électricité comprend, comme la figure 1 le représente, une portion rigide 1 traversant une paroi de protection biologique 2 par des trous de celle-ci prévus pour le passage de diverses transmissions ou divers transferts d'objets entre l'enceinte délimitée par la paroi de protection biologique 2 et l'extérieur. La portion rigide 1 est connectée à une alimentation en électricité 3. Comme le montre la figure 2, elle comprend un ou plusieurs éléments conducteurs 4 (deux dans le cas présent) en forme de plaques allongées, en cuivre et séparés l'un de l'autre par une feuille isolante intermédiaire 5. Les éléments conducteurs 4 sont munis de canaux de refroidissement 6 en relief saillant sur leur surface extérieure. Les canaux de refroidissement 6 sont sinueux et plus précisément composés de chicanes 7 séparant des portions rectilignes 8. Des écrans 9 de cuivre sont raccordés aux éléments conducteurs 4 dans l'alignement des portions rectilignes 8, et ils sont en saillie avec le même relief que les canaux de refroidissement 6 sur les éléments conducteurs 4. Cette disposition permet d'arrêter, par les écrans 9 en cuivre, du rayonnement ionisant qui traverserait la paroi de protection biologique 2 en empruntant les portions rectilignes 8 des canaux de refroidissement 6, notamment quand ceux-ci ont été vidés du liquide de refroidissement qui y coule en général. Les canaux de refroidissement 6 finissent sur des embouts de raccordement 10 qui seront décrits plus loin et s'étendent en direction transversale des éléments conducteurs 4. La portion rigide 1 comprend encore une coque 11 de polymère formée de deux moitiés assemblées entourant les éléments conducteurs 4 pour combler le reste de la section du trou de la paroi de protection biologique 2 dans lequel la portion rigide 1 est engagée ; enfin, un capot de blindage électromagnétique 12 entoure l'ensemble.

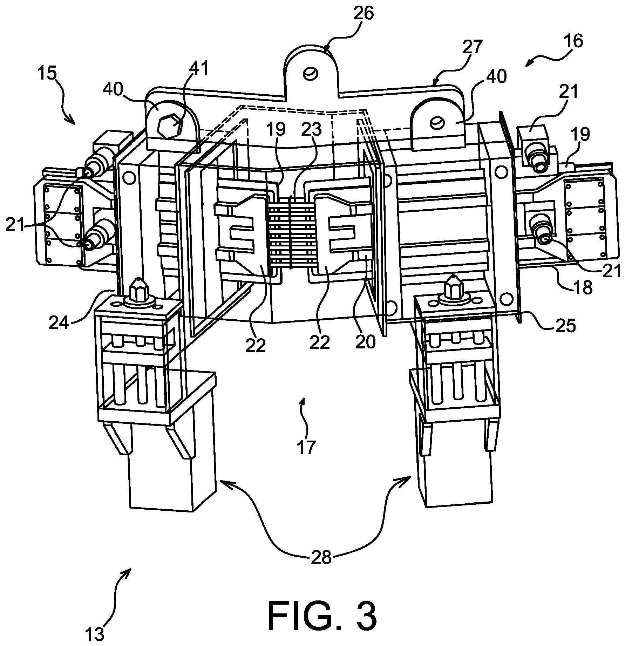

Un élément important de l'invention se trouve dans une autre portion du dispositif de transport d'électricité, qui relie, de l'autre côté de la paroi de protection 2, la portion rigide 1 déjà décrite à un creuset de vitrification 14 qui peut être déplacé dans un petit débattement. Cette autre portion, qui est illustrée à la figure 3, est une portion flexible 13 qui comprend deux tronçons 15 et 16 successifs, joints par un raccord flexible 17. Les tronçons 15 et 16 comprennent chacun, comme la portion rigide 1, une paire d'éléments conducteurs 18 en plaques de cuivre allongées et une feuille isolante intermédiaire 19 qui les sépare. Les éléments conducteurs 18 sont encore munis de canaux de refroidissement 20 s'étendant longitudinalement à eux et qui finissent, aux extrémités éloignées des tronçons 15 et 16, sur des raccords 21 analogues aux raccords 10 déjà rencontrés et, aux extrémités dirigées l'une vers l'autre des tronçons 15 et 16, sur des canaux de jonction 22 s'étendant transversalement aux éléments conducteurs 18.

Les canaux de jonction 22 sont réunis entre eux par des tubes flexibles 23 métalliques (en acier inoxydable ou en cuivre) qui servent à la fois de jonction mécanique, électrique et hydraulique entre les tronçons 15 et 16 en laissant passer l'électricité et l'eau des canaux de refroidissement 20. Le nombre des tubes flexibles 23, leur disposition et leur longueur sont déterminés afin de réduire autant que possible l'inductance du tronçon. Aucune autre pièce ne relie électriquement les tronçons 15 et 16. La propriété essentielle des tubes flexibles 23 est de résister à la flexion produite par le débattement angulaire des tronçons 15 et 16 l'un par rapport à l'autre et d'absorber donc les variations de position du creuset de vitrification 14. L'isolation électrique entre les tubes flexibles 23 reliés aux conducteurs 18 respectifs est maintenue par les feuilles isolantes intermédiaires 19 qui débordent des éléments conducteurs 18 et les séparent les uns des autres sur une partie de leur longueur. Un écartement suffisant entre les tubes flexibles 23 peut de toute façon être choisi pour éliminer tout risque de création d'arcs électriques en s'assurant de ne pas trop augmenter l'inductance de la ligne. On a aussi constaté que les flexions des tubes flexibles 23 dans des limites modérées ne rompaient pas les brasures par lesquelles ils sont assemblés aux canaux de jonction 22. Les tronçons 15 et 16 sont entourés par des capots de blindage électromagnétique 24 qui s'étendent aussi autour des tubes flexibles 23 et présentent des portions de recouvrement entre eux, s'opposant ainsi à toute fuite du flux électromagnétique vers l'extérieur.

Des précautions sont prises pour éviter la rupture du raccord flexible 17 par une manipulation maladroite. Les tronçons 15 et 16 sont aussi réunis par un support 26 muni d'un balancier 27 aux extrémités duquel les tronçons 15 et 16 sont suspendus par des liaisons articulées comprenant une patte 40 solidaire du tronçon 15 ou 16 respectif et un axe boulonné 41 (dont un seul est représenté).Quand la portion flexible 13 doit être déplacée, elle est soulevée par un engin de télémanipulation non représenté saisissant le support 26 : le balancier 27 est équilibré en fonction des masses des sous-ensembles 15 et 16 de la portion flexible 13 liés aux tronçons, ils demeurent au même niveau, et les tubes flexibles 23 sont presque déchargés. De plus, les tronçons 15 et 16 sont munis de pieds 28 pour les maintenir à une hauteur identique et invariable sur un support commun quand la portion flexible 13 est lâchée. Quand les tronçons 15 et 16 sont posés, le balancier 27 est démonté et retiré en dévissant les axes boulonnés 41 pour qu'on puisse régler la position et la forme de la portion flexible 13.

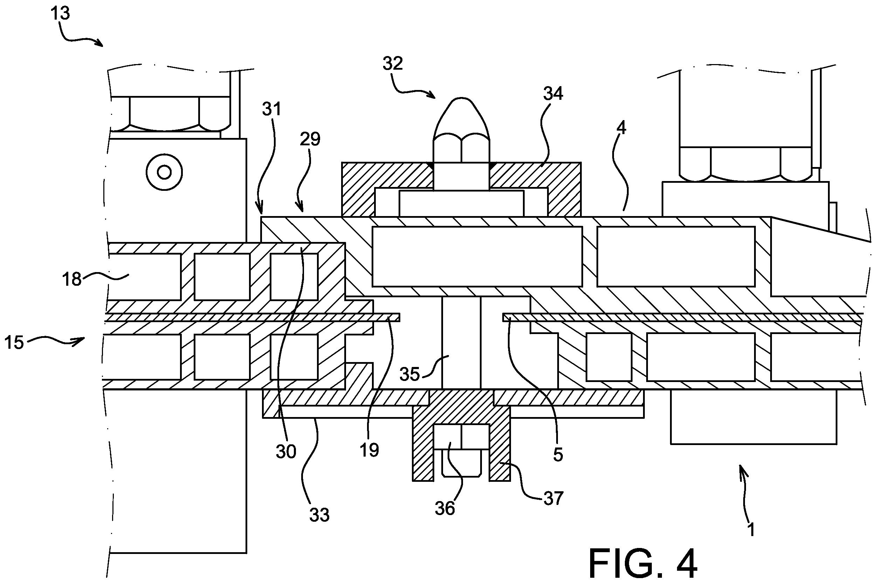

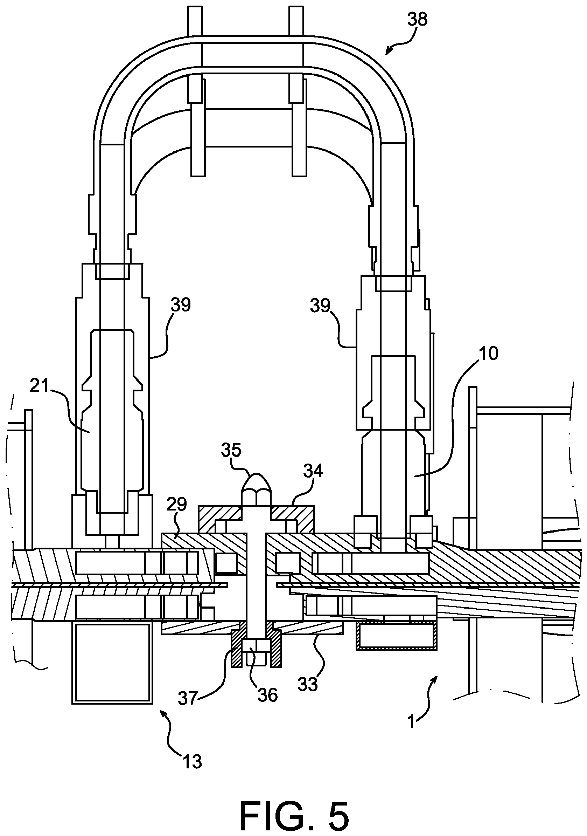

D'autres éléments du dispositif seront maintenant décrits à propos de la connexion entre la portion rigide 1 et la portion flexible 13. On se reporte pour cela aux figures 4 et 5. Un des éléments conducteurs 4 de la portion rigide 1 comprend une excroissance 29 munie d'une patte 31 d'appui sur le côté de cet élément conducteur 18, par une face latérale 30. Ainsi, la portion flexible 13 peut être calée longitudinalement et transversalement contre la portion rigide 1, dont la position est invariable.

La jonction électrique entre la portion rigide 1 et la portion flexible 13 est encore assurée par un étau 32 comprenant une mâchoire mobile 33 et une mâchoire fixe 34 s'appuyant sur les faces externes des éléments conducteurs 4 et 18. La mâchoire mobile 33 est conductrice et établit la liaison électrique entre les éléments conducteurs 4 et 18 homologues qui n'ont pas de liaison directe : elle chevauche ces éléments conducteurs 4 et 18 et reste distincte d'eux, pouvant être démontée ; la mâchoire fixe 34 est fixée à l'excroissance 29. Un boulon de serrage 35 les maintient l'une près de l'autre quand il est serré, en pressant la mâchoire mobile 33 contre les éléments conducteurs 4 et 18. Quand il est desserré, la mâchoire mobile est relâchée et les éléments conducteurs 4 et 18 peuvent être séparés. Le boulon de serrage est au potentiel électrique de la mâchoire fixe 34 et de l'excroissance 29, mais séparé électriquement de la mâchoire mobile 33 par une coupelle isolante 37 entre la mâchoire mobile 33 et un écrou 36 du boulon de serrage 35. Un manchon 37 entoure la tige du boulon de serrage 35 et comprend une collerette d'appui sur l'excroissance 29.

La transmission de l'électricité se fait donc par l'excroissance 29 pour une paire des éléments conducteurs 4 et 18 et par la mâchoire 33 conductrice pour l'autre paire des éléments conducteurs. Un déplacement du creuset de vitrification 14 dans les limites prévues est ressenti par un glissement des conducteurs 18 de la portion flexible 13 sur la face latérale 30 de l'excroissance 29 ou sur la mâchoire 33 conductrice, sans que le contact et la conduction soit rompu, et par une flexion du raccord flexible 17 comme on l'a déjà mentionné, que le déplacement soit horizontal ou vertical.

Les embouts 10 et 21 des portions 1 et 13 sont joints par des connecteurs 38 recourbés et qu'il est facile d'engager sur les embouts 10 et 21 par un outil télémanipulé. Les connecteurs 38 sont souples et un isolant électrique recouvre toute leur face extérieure. Ils sont avantageusement placés d'un même côté des tronçons pour être mis et ôtés plus aisément. Ils comprennent des bagues 39 s'engageant sur les embouts 10 et 21 en créant un encliquetage qui libère des clapets non représentés dans les embouts 10 et 21 et dans les connecteurs 38 pour ouvrir la communication des canaux. Ces clapets se referment automatiquement quand les connecteurs 38 sont retirés, fermant donc les canaux et évitant les fuites. De tels systèmes sont connus dans le domaine des connexions hydrauliques, de sorte qu'ils ne seront pas décrits plus ici.

## Revendications

1. Dispositif de transport de l'électricité, comprenant au moins un élément conducteur de l'électricité, construit essentiellement en un profilé rigide et allongé, l'élément conducteur comprenant deux tronçons (15, 16) séparés par un raccord (17) composé d'éléments flexibles (23) conducteurs de l'électricité, **caractérisé en ce qu'**il comprend un dispositif de support (26) conjoint des deux tronçons, et les éléments flexibles (23) sont des tubes métalliques brasés sur les tronçons de l'élément conducteur.

2. Dispositif de transport de l'électricité selon la revendication 1, où l'élément conducteur est muni de canaux (20) de refroidissement, **caractérisé en ce que** les tubes (23) sont raccordés auxdits canaux de refroidissement, ceux-ci étant intégrés structurellement et électriquement au profilé.

3. Dispositif de transport de l'électricité selon l'une quelconque des revendications 1 ou 2, où l'élément conducteur est en cuivre, **caractérisé en ce que** les éléments flexibles sont en acier ou en cuivre.

4. Dispositif de transport de l'électricité selon l'une quelconque des revendications 1 à 3, **caractérisé en ce que** le support conjoint des deux tronçons comprend un balancier (27), les tronçons étant suspendus à des extrémités opposées du balancier.

5. Dispositif de transport de l'électricité selon l'une quelconque des revendications 1 à 4, **caractérisé en ce que** les tronçons comprennent des pieds (28) respectifs d'appui.

6. Dispositif de transport de l'électricité selon l'une quelconque des revendications 1 à 5, **caractérisé en ce que** les tronçons sont entourés de capots de blindage électromagnétique respectifs (24, 25) qui se recouvrent devant les éléments flexibles (23) .

7. Dispositif de transport de l'électricité selon l'une quelconque des revendications 1 à 6, **caractérisé en ce que** l'élément conducteur comprend un troisième tronçon (1) muni de canaux de refroidissement (6), lesdits canaux de refroidissement étant construits sur la surface du troisième tronçon et de forme sinueuse, le troisième tronçon comprend des écrans de radiations ionisantes (9) alignés avec des portions rectilignes des canaux de refroidissement, un capot de blindage électromagnétique (12) comprenant une surface extérieure d'ajustement et qui entoure le troisième tronçon, et une coque de remplissage (11) qui s'étend entre le troisième tronçon et le capot de blindage électromagnétique.

8. Dispositif de transport de l'électricité selon l'une quelconque des revendications 1 à 6, **caractérisé en ce que** l'élément conducteur comprend au moins un troisième tronçon mis en prolongement avec un autre des tronçons, et un connecteur de raccordement des tronçons mis en prolongement comprenant un étau (32) à mâchoires de serrage (33, 34) desdits tronçons mis en prolongement.

9. Dispositif de transport de l'électricité selon la revendication 8, **caractérisé en ce que** les tronçons comprennent des parties de connexion (29) se joignant par des faces de contact glissant (30) dans une direction d'allongement des tronçons mis en prolongement et superposées dans une direction de fermeture des mâchoires.

10. Dispositif de transport de l'électricité selon la revendication 8 ou 9, **caractérisé en ce qu'**une des mâchoires (33) au moins est conductrice et établit une liaison électrique en chevauchant les tronçons mis en prolongement et en étant distincte d'eux.

11. Dispositif de transport de l'électricité selon la revendication 9, où les tronçons sont munis de canaux de refroidissement, **caractérisé en ce que** les canaux de refroidissement des tronçons mis en prolongement sont raccordés par des connecteurs (38) séparables.

12. Dispositif de transport de l'électricité selon la revendication 11, **caractérisé en ce que** les connecteurs séparables et des embouts des canaux de refroidissement des tronçons sont munis de clapets à auto-obturation quand les raccords sont séparés des embouts.

13. Dispositif de transport de l'électricité selon la revendication 4, **caractérisé en ce que** le palan à balancier est amovible des tronçons.

14. Ensemble comprenant une alimentation (3) en électricité, un appareil (14) alimenté par ladite alimentation, et un dispositif de transport de l'électricité selon l'une quelconque des revendications précédentes, le dispositif de transport de l'électricité traversant une enceinte de protection biologique (2) dans laquelle l'appareil, ainsi que le raccord composé des éléments flexibles conducteurs de l'électricité, sont placés.

## Patentansprüche

1. Vorrichtung zum Transport von Elektrizität, umfassend mindestens ein Elektrizität leitendes Element, das im Wesentlichen aus einem starren und langgestreckten Profil aufgebaut ist, wobei das leitende Element zwei Teilstücke (15, 16) umfasst, die durch ein Kopplungsteil (17) getrennt sind, das aus Elektrizität leitenden flexiblen Elementen (23) besteht, **dadurch gekennzeichnet, dass** es eine gemeinsame Trägervorrichtung (26) für die beiden Teilstücke umfasst und die flexiblen Elemente (23) Metallrohre sind, die an die Teilstücke des leitenden Elements hartgelötet sind.

2. Vorrichtung zum Transport von Elektrizität nach Anspruch 1, wobei das leitende Element mit Kühlkanälen (20) versehen ist, **dadurch gekennzeichnet, dass** die Rohre (23) mit den Kühlkanälen gekoppelt sind, wobei diese strukturell und elektrisch in das Profil integriert sind.

3. Vorrichtung zum Transport von Elektrizität nach einem der Ansprüche 1 oder 2, wobei das leitende Element aus Kupfer ist, **dadurch gekennzeichnet, dass** die flexiblen Elemente aus Stahl oder aus Kupfer sind.

4. Vorrichtung zum Transport von Elektrizität nach einem der Ansprüche 1 bis 3, **dadurch gekennzeichnet, dass** der gemeinsame Träger der beiden Teilstücke einen Schwingarm (27) umfasst, wobei die Teilstücke an entgegengesetzten Enden des Schwingarms aufgehängt sind.

5. Vorrichtung zum Transport von Elektrizität nach einem der Ansprüche 1 bis 4, **dadurch gekennzeichnet, dass** die Teilstücke jeweils Stützfüße (28) umfassen.

6. Vorrichtung zum Transport von Elektrizität nach einem der Ansprüche 1 bis 5, **dadurch gekennzeichnet, dass** die Teilstücke jeweils von Abdeckkappen zur elektromagnetischen Abschirmung (24, 25) umgeben sind, die sich vor den flexiblen Elementen (23) überdecken.

7. Vorrichtung zum Transport von Elektrizität nach einem der Ansprüche 1 bis 6, **dadurch gekennzeichnet, dass** das leitende Element ein drittes Teilstück (1) umfasst, das mit Kühlkanälen (6) versehen ist, wobei die Kühlkanäle auf der Oberfläche des dritten Teilstücks und schlangenartig aufgebaut sind, das dritte Teilstück Schirme gegen ionisierende Strahlung (9) umfasst, die mit geradlinigen Abschnitten der Kühlkanäle fluchten, eine Abdeckkappe (12) zur elektromagnetischen Abschirmung, die eine Anpassungsaußenfläche umfasst und die das dritte Teilstück umgibt, und eine Füllschale (11), die sich zwischen dem dritten Teilstück und der Abdeckkappe zur elektromagnetischen Abschirmung erstreckt.

8. Vorrichtung zum Transport von Elektrizität nach einem der Ansprüche 1 bis 6, **dadurch gekennzeichnet, dass** das leitende Element mindestens ein drittes Teilstück umfasst, das in Verlängerung mit einem anderen der Teilstücke gesetzt ist, und einen Verbinder zum Koppeln der in Verlängerung gesetzten Teilstücke, der einen Schraubstock (32) mit Klemmbacken (33, 34) für die in Verlängerung gesetzten Teilstücke umfasst.

9. Vorrichtung zum Transport von Elektrizität nach Anspruch 8, **dadurch gekennzeichnet, dass** die Teilstücke Anschlussteile (29) umfassen, die sich über Kontaktflächen (30) verbinden, die in eine Ausdehnungsrichtung der in Verlängerung gesetzten Teilstücke gleiten und in eine Schließrichtung der Backen übereinander gesetzt sind.

10. Vorrichtung zum Transport von Elektrizität nach Anspruch 8 oder 9, **dadurch gekennzeichnet, dass** mindestens eine der Backen (33) leitend ist und eine elektrische Verbindung herstellt, indem sie die in Verlängerung gesetzten Teilstücke übergreift und von ihnen getrennt ist.

11. Vorrichtung zum Transport von Elektrizität nach Anspruch 9, wobei die Teilstücke mit Kühlkanälen versehen sind, **dadurch gekennzeichnet, dass** die Kühlkanäle der in Verlängerung gesetzten Teilstücke durch trennbare Verbinder (38) gekoppelt sind.

12. Vorrichtung zum Transport von Elektrizität nach Anspruch 11, **dadurch gekennzeichnet, dass** die trennbaren Verbinder und Endstücke der Kühlkanäle der Teilstücke mit selbstschließenden Klappen versehen sind, wenn die Kopplungsteile von den Endstücken getrennt sind.

13. Vorrichtung zum Transport von Elektrizität nach Anspruch 4, **dadurch gekennzeichnet, dass** der Flaschenzug mit Schwingarm von den Teilstücken lösbar ist.

14. Anordnung aus einer Elektrizitätsversorgung (3), einem von dieser Versorgung versorgten Gerät (14) und einer Vorrichtung zum Transport von Elektrizität nach einem der vorhergehenden Ansprüche, wobei die Vorrichtung zum Transport von Elektrizität eine biologische Schutzhülle (2) durchquert, in der das Gerät sowie das aus den Elektrizität leitenden flexiblen Elementen bestehende Kupplungsteil angeordnet sind.

## Claims

1. Device for transmission of electricity, comprising at least one electricity conducting element, composed essentially of a rigid and elongated section, the conducting element comprising two segments (15, 16) separated by a connection (17) composed of flexible electricity conducting elements (23), **characterised in that** it comprises a joint support device (26) for the two segments, and the flexible elements (23) are metallic tubes brazed onto segments of the conducting element.

2. Electricity transmission device according to claim 1, in which the conducting element is fitted with cooling channels (20), **characterised in that** the tubes (23) are connected to said cooling channels, themselves being structurally and electrically integrated into the section.

3. Electricity transmission device according to any one of claims 1 or 2 in which the conducting element is made of copper, **characterised in that** the flexible elements are made of steel or copper.

4. Electricity transmission device according to any one of claims 1 to 3, **characterised in that** the joint support of the two segments comprises a swing arm, the segments being suspended at opposite ends of the swing arm.

5. Electricity transmission device according to any one of claims 1 to 4, **characterised in that** the segments comprise corresponding support stands (28) .

6. Electricity transmission device according to any one of claims 1 to 5, **characterised in that** the segments are surrounded by corresponding electromagnetic shielding covers (24, 25) that overlap in front of the flexible elements (23).

7. Electricity transmission device according to any one of claims 1 to 6, **characterised in that** the conducting element comprises a third segment (1) provided with cooling channels (6), said cooling channels being made on the surface of the third segment and with a wave shape, the third segment comprises ionising radiation screens (9) aligned with straight line portions of cooling channels, an electromagnetic shielding cover (12) comprising an outside adjustment surface that surrounds the third segment, and a filling shell (11) that extends between the third segment and the electromagnetic shielding cover.

8. Electricity transmission device according to any one of claims 1 to 6, **characterised in that** the conducting element comprises at least one third segment prolonging another of the segments, and a connector for connecting the prolonged segments comprising a vice (32) with clamping jaws (33, 34) for said segments being prolonged.

9. Electricity transmission device according to claim 8, **characterised in that** the segments comprise connection parts (29) being joined together by contact faces (30) sliding along a direction in which segments being prolonged are elongated and superposed in a jaw closing direction.

10. Electricity transmission device according to claim 8 or 9, **characterised in that** at least one of the jaws (33) is conducting and sets up an electrical connection by overlapping prolonged segments and being separate from them.

11. Electricity transmission device according to claim 9, in which the segments are fitted with cooling channels, **characterised in that** the cooling channels of the prolonged segments are connected with separable connectors (38).

12. Electricity transmission device according to claim 11, **characterised in that** the separable connectors and cooling channel end pieces of the segments are fitted with self-closing valves when the connectors are separated from the end pieces.

13. Electricity transmission device according to claim 4, **characterised in that** the pulley block with swing arm is removable from the segments.

14. Assembly comprising an electricity power supply (3), an instrument (14) powered by said power supply, and an electricity transmission device according to any of the previous claims, the electricity transmission device passing through a biological protection chamber (2) in which the instrument and the connector composed of flexible electricity conducting elements are placed.
